# FASCICULE DE BREVET EUROPEEN

(11) **EP 0 469 667 B1**
(45) Date de publication et mention de la délivrance du brevet: **17.01.1996**
(21) Numéro de dépôt: 91201913.0
(22) Date de dépôt: 22.07.1991
(51) Int. Cl.: C08G 61/12

(54) **Compositions de polymères conducteurs d'électricité dérivés de pyrrole substitué ou non, procédé pour leur obtention et utilisation de ces compositions**
Zusammensetzungen aus elektrisch leitfähigen Polymeren von substituiertem oder nichtsubstituiertem Pyrrol, Verfahren für ihren Erhalt und Verwendung dieser Zusammensetzungen
Electrically conductive polymer compositions derived from substituted or non-substituted pyrrole, method for obtaining them and their use

(30) Priorité: 31.07.1990 BE 9000760
(43) Date de publication de la demande: 05.02.1992
(73) Titulaire: SOLVAY (Société Anonyme), B-1050 Bruxelles (BE)
(72) Inventeur: Destryker, Elise, B-1600 Sint-Pieters-Leeuw (BE); Hannecart, Etienne, B-3080 Tervuren (BE)
(74) Mandataire: Meyers, Liliane

(56) Documents cités:
- EP-A- 0 267 392
- PATENT ABSTRACTS OF JAPAN, vol. 13, no. 442 (C-641)[3790], 4 octobre 1989; & JP-A-1 170 615 (NITTO DENKO K.K.) 05-07-1989
- PATENT ABSTRACTS OF JAPAN, vol. 15, no. 123 (C-816)[4651], 26 mars 1991; & JP-A-3 7715 (RES. INST. FOR PROD. DEV.) 14-01-1991

## Description

La présente invention concerne des compositions de polymères conducteurs d'électricité dérivés de polymères de pyrroles, substitués ou non, contenant du pentoxyde de vanadium et un anion. L'invention concerne également un procédé pour la préparation de ces compositions par polymérisation chimique du pyrrole et/ou du pyrrole substitué en présence de pentoxyde de vanadium comme agent oxydant et d'un acide donnant l'anion.

Dans la demande de brevet JP 87/331022 (Nitto Denko Corp.), on a proposé un procédé de préparation de polymères conducteurs d'électricité à base de pyrrole par polymérisation chimique du pyrrole en présence d'un agent oxydant, tel que notamment H₂0₂, Pb0₂ ou Mn0₂, et d'un acide protonique, tel que notamment HCl ou H₂SO₄.

Toutefois certaines applications électriques, telles que la réalisation de systèmes de stockage électrochimiques de type capacités ou condensateurs à haute densité d'énergie et à nombre élevé de cyclage, exigent des polymères conducteurs aux propriétés particulières présentant des morphologies élaborées.

Ces propriétés particulières sont notamment une grande énergie massique et volumique pour les utilisations dans des sources d'énergie alimentant des systèmes portables, une bonne résistance du polymère face au vieillissement dans une large gamme de température et de conditions de stockage.

La morphologie élaborée quant à elle est caractérisée notamment par une grande surface spécifique. Ces propriétés permettent de mettre en oeuvre ces polymères conducteurs lors de la fabrication de batteries feuillets notamment.

Par ailleurs la composition contenant les polymères conducteurs présente une conductivité élevée, ce qui élargit ses applications potentielles.

La présente invention vise à fournir de nouvelles compositions de polymères conducteurs d'électricité à base de pyrrole qui présentent les propriétés particulières susmentionnées.

L'invention concerne à cet effet une composition comprenant un polymère conducteur d'électricité, choisi parmi du polypyrrole et/ou du polypyrrole substitué, du pentoxyde de vanadium et un anion.

On met en oeuvre dans les compositions de l'invention du pentoxyde de vanadium. Tout autre composé du vanadium tel que le trioxyde de vanadium, l'oxydichlorure de vanadium, l'oxysulfate de vanadium ou l'oxytrichlorure de vanadium susceptible de générer chimiquement du pentoxyde de vanadium peut toutefois également être utilisé.

Par polypyrrole et/ou polypyrrole substitué, on entend tous les polymères issus du pyrrole et/ou de pyrroles substitués, c'est-à-dire les homopolymères et les copolymères comportant des unités de pyrrole ou de pyrrole substitué. Parmi les pyrroles substitués, on entend habituellement les pyrroles substitués en position 3 ou 3 et 4 et le N-méthylpyrrole. Les meilleurs résultats ont été obtenus avec le pyrrole non substitué.

Les compositions selon l'invention contiennent habituellement 0,1 à 99 % d'oxyde de vanadium en poids de la composition et de préférence 1 à 98 % et de manière particulièrement préférée 5 à 95 %.

Généralement les compositions selon l'invention contiennent également au moins un anion, d'origine organique ou inorganique. Généralement elles contiennent comme anion d'origine inorganique un chlorure, un sulfate ou un nitrate et comme anion d'origine organique un carboxylate, un phosphate, un phosphonate, un sulfate organique, un sulfonate organique, un alkylsulfate, un alkylarylsulfate, un alkylsulfonate, un alkylarylsulfonate. Habituellement elles contiennent comme anion d'origine inorganique un chlorure et comme anion d'origine organique un carboxylate tel qu'un laurate, un acétate, un trichloroacétate, un trifluoroacétate, un phosphate tel qu'un glycérol-2-phosphate, un phosphonate tel qu'un phénylphosphonate, un sulfate tel qu'un laurylsulfate, un dodécylsulfate, un octylsulfate, un éthylhexylsulfate, un sulfonate tel qu'un p-toluènesulfonate, un pentadécylsulfonate, un hexadécylsulfonate, un dodécylbenzenesulfonate, un polyvinylsulfonate, un polystyrènesulfonate, un trifluorométhanesulfonate, un méthanesulfonate, un dodécylsulfonate, un octanesulfonate, un butylsulfonate, un hexylsulfonate, un éthylsulfonate.

Les compositions selon l'invention peuvent contenir un de ces anions ou un mélange de deux ou plusieurs de ces anions. De manière préférée, elles contiennent au moins comme anion d'origine inorganique le chlorure et comme anion d'origine organique l'octanesulfonate, le p-toluènesulfonate, le butylesulfonate, le méthylsulfonate, le trifluorométhanesulfonate.

La surface spécifique des compositions selon l'invention est habituellement supérieure à 5 m/g et est de préférence supérieur à 10 m/g.

La présente invention concerne également un procédé pour la préparation des compositions selon l'invention.

A cet effet l'invention concerne un procédé pour la préparation d'une composition comprenant un polymère conducteur d'électricité, choisi parmi du polypyrrole et/ou du polypyrrole substitué, par polymérisation chimique du pyrrole et/ou du pyrrole substitué dans un milieu réactionnel aqueux comprenant le pentoxyde de vanadium comme agent oxydant et un acide.

Généralement on met en oeuvre 0,10 à 50 moles de composé du vanadium par mole de pyrrole et/ou de pyrrole substitué, habituellement 0,50 à 35 moles et de manière préférée 0,75 à 25 moles.

Habituellement dans le milieu réactionnel on met également en oeuvre au moins un acide. Généralement on met en oeuvre un acide organique ou inorganique. Habituellement on met en oeuvre comme acide inorganique l'acide chlorhydrique et comme acide organique un acide carboxylique, un acide phosphonique, un acide sulfonique. Habituellement on met en oeuvre comme acide organique un acide carboxylique tel qu'un acide dont l'anion est un laurate, un acétate, un trichloroacétate ou un trifluoroacétate, un acide phosphonique tel q'un acide dont l'anion est un phénylphosphonate, un acide sulfonique tel qu'un acide dont l'anion est un p-toluènesulfonate, un pentadécylsulfonate, un hexadécylsulfonate, un dodécylbenzenesulfonate, un polyvinylsulfonate, un polystyrènesulfonate, un trifluorométhanesulfonate, un méthanesulfonate, un dodécylsulfonate, un octanesulfonate, un butylsulfonate, un hexylsulfonate, un éthylsulfonate. Généralement on met en oeuvre un ou plusieurs de ces acides. De manière préférée, on met en oeuvre l'acide chlorhydrique, l'acide p-toluènesulfonique, l'acide trifluorométhanesulfonique, l'acide octanesulfonique, l'acide butylesulfonique, l'acide méthylsulfonique.

Indépendamment de la présence de l'acide précité, le milieu réactionnel peut également contenir un sel. Comme sel on met en oeuvre un sel d'origine organique ou un sel d'origine inorganique. Généralement on met en oeuvre les sels correspondants aux anions présents dans la composition selon l'invention ou aux acides introduits dans le milieu réactionnel mis en oeuvre dans le procédé selon l'invention, de même que les sels contenant un phosphate tel qu'un glycérol-2-phosphate, un sulfate tel qu'un laurylsulfate, un dodécylsulfate, un octylsulfate, un éthylhexylsulfate.

Généralement on met en oeuvre 0,5 à 20 moles d'acide par mole de pyrrole et/ou de pyrrole substitué. De bons résultats ont été obtenus avec des concentrations comprises entre 1 et 10 moles d'acide par mole de pyrrole et/ou de pyrrole substitué.

Il est possible de réaliser le procédé selon l'invention en absence de sel. Cependant on réalise avantageusement le procédé en présence de sel.

Généralement on met en oeuvre 0,01 à 20 moles de sel par mole de pyrrole et/ou de pyrrole substitué. De bons résultats ont été obtenus avec des concentrations comprises entre 0,1 et 10 moles de sel par mole de pyrrole et/ou de pyrrole substitué.

Le procédé selon l'invention s'opère de préférence en milieu aqueux, mais la quantité d'eau nécessaire peut varier entre de larges limites et dépend essentiellement de la nature des autres composants mis en oeuvre.

La température à laquelle est réalisé le procédé est généralement comprise entre 0 et 50°C et de préférence entre 5 et 40°C lorsqu'on opère à pression atmosphérique.

La pression à laquelle est réalisé le procédé n'est pas critique en soi. Elle est généralement comprise entre 0,1 et 10 bars et de préférence elle est égale à la pression atmosphérique.

Le procédé selon l'invention peut être réalisé dans tout appareillage ou tout réacteur permettant de réunir les conditions opératoires décrites ci-avant.

Les compositions de l'invention peuvent être utilisées pour leurs propriétés de conductivité électrique, d'absorption électromagnétique et de conductivité thermique et plus particulièrement pour la réalisation de dispositifs électroconducteurs.

La composition comprenant un polymère conducteur d'électricité selon l'invention peut alors être dopée par des cations ou des anions pendant la charge ou la décharge du système, les cations ou les anions proviennent de l'électrolyte. Cependant certains anions peuvent également provenir de la composition elle-même.

Les électrolytes sont généralement choisis parmi les sels conducteurs de formule C⁺A⁻ dans laquelle C⁺ est un cation et dans laquelle A⁻ est un anion.

Le cation C⁺ est choisi habituellement parmi les ions ammonium, alcalino-terreux ou alcalins, les ions R₄N⁺ et R₄P⁺ (R étant un radical alkyle, tel que les radicaux éthyle et butyle par exemple) et de préférence parmi les cations Li⁺, Na⁺ ou K⁺, ou des ions complexes tels que (Bu)₄N⁺ ou (Et)₄N⁺, mis en oeuvre de manière préférée sous la forme de LiCl0₄, KPF₆, (Bu)₄NCl0₄ et (Et)₄NCl0₄ en solution dans un solvant tel que l'acétonitrile, le tétrahydrofurane ou le carbonate de propylène.

L'anion A- est choisi parmi les ions Cl0₄ ⁻, AsF₆ ⁻ _{,} SbF₆ ⁻, S0₄ ²⁻, C₆H₅S0₃ ⁻, BF₄ ⁻, PF₆ ⁻, CF₃S0₃ ⁻, I₃ ⁻, Br⁻ et N0₃ ⁻. Les meilleurs résultats ont été obtenus avec l'ion Cl0₄ ⁻.

Les compositions selon l'invention peuvent avantageusement être utilisées dans des systèmes de stockage électrochimiques de type capacités ou condensateurs à haute densité d'énergie et grande durée de cyclage. Les condensateurs sont constitués de deux électrodes séparées par un électrolyte, au moins une des deux électrodes est constituée de la composition comprenant un polymère conducteur d'électricité selon l'invention. Ces condensateurs électrochimiques de haute énergie spécifique peuvent être des condensateurs symétriques (les deux électrodes sont identiques) ou dissymétriques (les deux électrodes sont de nature différente).

Dans le cas de condensateur dissymétrique, la contre-électrode est formée soit par un polymère conducteur différent, soit par un métal alcalin ou un composé d'insertion. La contre-électrode peut être formée par un polymère dopé p tel que notamment les autres polymères conducteurs d'électricité à base de polypyrroles, substitués ou non, de polythiophènes, substitués ou non, de polyacétylène, de polyphénylène ou de polymère d'aniline.

La composition comprenant un polymère conducteur selon l'invention peut être également utilisée dans la réalisation de batteries rechargeables, de générateur, de pile ou d'accumulateur électrique dont les anodes (respectivement les cathodes) sont constituées d'électrodes constituées par ou revêtues de films formés par ces compositions, selon l'invention, dopées par des anions (respectivement des cations).

L'invention est illustrée par les exemples suivants :

### Exemple 1

Dans un ballon à 3 cols de 500 ml, on introduit sous atmosphère d'azote 5,0 g (0,027 mole) d'oxyde de vanadium V₂0₅ et 75 ml d'une solution aqueuse contenant 24,3 g (0,11 mole) d'octanesulfonate de sodium et 56 ml d'acide chlorhydrique 2N.

Au milieu réactionnel ainsi obtenu, on ajoute, sous agitation à 20°C, 1,5 ml (0,022 mole) de pyrrole.

Le ballon est maintenu 2 heures à 20°C sous agitation.

On filtre le polymère obtenu sous atmosphère d'azote, puis on le lave 3 fois par 100 ml d'eau, 3 fois par 100 ml d'un mélange 50/50 d'eau et de méthanol puis 3 fois par 100 ml de méthanol.

Ensuite on sèche le polymère sous vide (sous 2670 Pa : soit 20 mm Hg) à 20°C durant une nuit.

On obtient 2,5 g d'une poudre noire. Cette poudre est pressée à 20°C durant quelques minutes sous une pression de 19,6.10⁷ Pa (soit 2 tonnes par cm). La plaquette obtenue a une conductivité de 19 S.cm⁻¹.

La surface spécifique de la poudre s'élève à 49 m/g, son volume poreux à 2,85 cm³/g.

La composition comprenant le polymère conducteur contient 47 % de polypyrrole et 19 % d'oxyde de vanadium.

Le taux de conversion - polymère calculé comme non dopé/monomère - est d'environ 77 % en poids.

La composition élémentaire du polymère conducteur obtenu est N/Cl/S : 1/0,14/0,19 en atome-gramme.

### Exemple 2

Dans un ballon à 3 cols de 500 ml, on introduit sous atmosphère d'azote 9,9 g (0,054 mole) d'oxyde de vanadium V₂0₅ et 150 ml d'une solution aqueuse contenant 43 g (0,22 mole) d'acide p-toluènesulfonique.

Au milieu réactionnel ainsi obtenu, on ajoute, sous agitation à 20°C, 3 ml (0,044 mole) de pyrrole.

Le ballon est maintenu 2 heures à 20°C sous agitation.

On filtre le polymère obtenu sous atmosphère d'azote, puis on le lave 3 fois par 100 ml d'eau, 3 fois par 100 ml d'un mélange 50/50 d'eau et de méthanol puis 3 fois par 100 ml de méthanol.

Ensuite on sèche le polymère sous vide (sous 2670 Pa : soit 20 mm Hg) à 20°C durant une nuit.

On obtient 5,6 g d'une poudre noire.

Cette poudre est pressée à 20°C durant quelques minutes sous une pression de 19,6.10⁷ Pa (soit 2 tonnes par cm). La plaquette obtenue a une conductivité de 32 S.cm⁻¹.

La surface spécifique de la poudre s'élève à 19 m/g, son volume poreux à 1,62 cm³/g.

La composition comprenant le polymère conducteur contient 47 % de polypyrrole et 10 % d'oxyde de vanadium.

Le taux de conversion - polymère calculé comme non dopé/monomère - est d'environ 87 % en poids.

La composition élémentaire du polymère conducteur obtenu est N/Cl/S : 1/-/0,30 en atome-gramme.

### Exemple 3 R (de comparaison)

Dans un ballon à 3 cols de 500 ml, on introduit sous atmosphère d'azote 4,7 g (0,054 mole) de Mn0₂ et 150 ml d'acide chlorhydrique 0,9N.

Au milieu réactionnel ainsi obtenu, on ajoute, sous agitation à 20°C, 3 ml (0,044 mole) de pyrrole.

Le ballon est maintenu 2 heures à 20°C sous agitation.

On filtre le polymère ainsi obtenu sous atmosphère d'azote, puis on le lave 3 fois par 100 ml d'eau, 3 fois par 100 ml d'un mélange 50/50 d'eau et de méthanol puis 3 fois par 100 ml de méthanol.

Ensuite on sèche le polymère sous vide à 20°C durant une nuit.

On obtient 4,3 g d'une poudre noire avec un taux de conversion - polymère calculé comme non dopé/monomère - de 42 %.

La composition de la poudre est de 61 % de MnO₂ et 32 % de polypyrrole.

Cette poudre est pressée à 20°C durant quelques minutes sous une pression de 19,6.10⁷ Pa (soit 2 tonnes par cm). La plaquette obtenue a une conductivité de 0,5 S.cm⁻¹.

La surface spécifique de la poudre s'élève à 14 m/g, son volume poreux à 0,65 cm³/g.

La composition élémentaire du polymère conducteur obtenu est N/Cl/S : 1/0,28/- en atome-gramme.

### Exemple 4

Dans un ballon à 3 cols de 500 ml, on introduit sous atmosphère d'azote 9,9 g (0,054 mole) d'oxyde de vanadium V₂0₅ et 150 ml d'une solution aqueuse contenant 113 ml d'acide chlorhydrique 2N.

Au milieu réactionnel ainsi obtenu, on ajoute, sous agitation à 20°C, 3 ml (0,045 mole) de pyrrole.

Le ballon est maintenu 2 heures à 20°C sous agitation.

On filtre le polymère obtenu sous atmosphère d'azote, puis on le lave 3 fois par 100 ml d'eau, 3 fois par 100 ml d'un mélange 50/50 d'eau et de méthanol puis 3 fois par 100 ml de méthanol.

Ensuite on sèche le polymère sous vide à 20°C durant une nuit.

On obtient 3,6 g d'une poudre noire.

Cette poudre est pressée à 20°C durant quelques minutes sous une pression de 19,6.10⁷ Pa (soit 2 tonnes par cm). La plaquette obtenue a une conductivité de 27 S.cm⁻¹.

La surface spécifique de la poudre s'élève à 38 m/g, son volume poreux à 0,41 cm³/g.

La composition comprenant le polymère conducteur contient 73 % de polypyrrole et 9 % d'oxyde de vanadium V₂0₅.

Le taux de conversion - polymère calculé comme non dopé/monomère - est d'environ 88% en poids.

La composition élémentaire du polymère conducteur obtenu est N/Cl/S : 1/0,28/- en atome-gramme.

### Exemple 5

Dans un ballon à 3 cols de 500 ml, on introduit sous atmosphère d'azote 13,75 g (0,076 mole) d'oxyde de vanadium V₂0₅ et 250 ml d'une solution aqueuse contenant 60 g (0,375 mole) de butylesulfonate de sodium et 62 ml d'acide chlorhydrique 6N.

Au milieu réactionnel ainsi obtenu, on ajoute, sous agitation à 20°C, 5 ml (0,075 mole) de pyrrole.

Le ballon est maintenu 2 heures à 20°C sous agitation.

On filtre le polymère obtenu sous atmosphère d'azote, puis on le lave 3 fois par 100 ml d'eau, 3 fois par 100 ml d'un mélange 50/50 d'eau et de méthanol puis 3 fois par 100 ml de méthanol.

Ensuite on sèche le polymère sous vide à 20°C durant une nuit.

On obtient 6,4 g d'une poudre noire.

Cette poudre est pressée à 20°C durant quelques minutes sous une pression de 19,6.10⁷ Pa (soit 2 tonnes par cm). La plaquette obtenue a une conductivité de 51 S.cm⁻¹.

La surface spécifique de la poudre s'élève à 52 m/g, son volume poreux à 3,30 cm³/g.

La composition comprenant le polymère conducteur contient 56 % de polypyrrole et 15 % d'oxyde de vanadium V₂0₅.

Le taux de conversion - polymère calculé comme non dopé/monomère - est d'environ 73 % en poids.

La composition élémentaire du polymère conducteur obtenu est N/Cl/S : 1/0,14/0,19 en atome-gramme.

### Exemple 6

Dans un ballon à 3 cols de 1 000 ml, on introduit sous atmosphère d'azote 27,5 g (0,15 mole) d'oxyde de vanadium V₂0₅ et 500 ml d'une solution aqueuse contenant 72 g (0,75 mole) d'acide méthylsulfonique.

Au milieu réactionnel ainsi obtenu, on ajoute, sous agitation à 20°C, 10 ml (0,015 mole) de pyrrole.

Le ballon est maintenu 2 heures à 20°C sous agitation.

On filtre le polymère obtenu sous atmosphère d'azote, puis on le lave 3 fois par 100 ml d'eau, 3 fois par 100 ml d'un mélange 50/50 d'eau et de méthanol puis 3 fois par 100 ml de méthanol.

Ensuite on sèche le polymère sous vide à 20°C durant une nuit.

On obtient 13,2 g d'une poudre noire.

Cette poudre est pressée à 20°C durant quelques minutes sous une pression de 19,6.10⁷ Pa (soit 2 tonnes par cm). La plaquette obtenue a une conductivité de 51 S.cm⁻¹.

La surface spécifique de la poudre s'élève à 25 m/g, son volume poreux à 1,51 cm³/g.

La composition comprenant le polymère conducteur contient 56 % de polypyrrole et 12 % d'oxyde de vanadium.

La composition élémentaire du polymère conducteur obtenu est N/Cl/S : 1 /- /0,27 en atome-gramme.

### Exemple 7

Dans un ballon à 3 cols de 500 ml, on introduit sous atmosphère d'azote 3,3 g (0,018 mole) d'oxyde de vanadium V₂0₅ et 50 ml d'une solution aqueuse contenant 11,3 g (0,075 mole) d'acide trifluorométhanesulfonique.

Au milieu réactionnel ainsi obtenu, on ajoute, sous agitation à 20°C, 1 ml (0,015 mole) de pyrrole.

Le ballon est maintenu 2 heures à 20°C sous agitation.

On filtre le polymère obtenu sous atmosphère d'azote, puis on le lave 3 fois par 25 ml d'eau, 3 fois par 25 ml d'un mélange 50/50 d'eau et de méthanol puis 3 fois par 25 ml de méthanol.

Ensuite on sèche le polymère sous vide à 20°C durant une nuit.

On obtient 1,6 g d'une poudre noire.

Cette poudre est pressée à 20°C durant quelques minutes sous une pression de 19,6.10⁷ Pa (soit 2 tonnes par cm). La plaquette obtenue a une conductivité de 25 S.cm⁻¹.

La surface spécifique de la poudre s'élève à 19 m/g, son volume poreux à 1,14 cm³/g.

La composition comprenant le polymère conducteur contient 53 % de polypyrrole et 6 % d'oxyde de vanadium.

La composition élémentaire du polymère conducteur obtenu est N/Cl/S : 1 /-/0,24 en atome-gramme.

Le taux de conversion - polymère calculé comme non dopé/monomère - est d'environ 85 % en poids.

## Revendications (Revendications pour l'(les) Etat(s) contractant(s) suivant(s): AT, BE, CH, DE, DK, FR, GB, GR, IT, LI, LU, NL, SE)

1. Composition comprenant un polymère conducteur d'électricité choisi parmi du polypyrrole et/ou du polypyrrole substitué, du pentoxyde de vanadium et un anion.

2. Composition selon la revendication 1, caractérisée en ce que l'anion est choisi parmi le chlorure, l'octanesulfonate, le p-toluènesulfonate, le butylesulfonate, le méthylsulfonate, le trifluorométhanesulfonate.

3. Procédé pour la préparation d'une composition comprenant un polymère conducteur d'électricité choisi parmi du polypyrrole et/ou du polypyrrole substitué par polymérisation chimique du pyrrole et/ou du pyrrole substitué dans un milieu réactionnel aqueux comprenant un agent oxydant et un acide caractérisé en ce que le milieu réactionnel comprend du pentoxyde de vanadium comme agent oxydant.

4. Procédé selon la revendication 3, caractérisé en ce que le milieu réactionnel contient au moins un sel.

5. Procédé selon l'une quelconque des revendications 3 ou 4, caractérisé en ce que l'acide mis en oeuvre est choisi parmi l'acide chlorhydrique, l'acide p-toluènesulfonique, l'acide trifluorométhanesulfonique, l'acide octanesulfonique, l'acide butylesulfonique, l'acide méthylsulfonique.

6. Utilisation des compositions selon l'une quelconque des revendications 1 ou 2 dans des batteries feuillets.

## Revendications (Revendications pour l'(les) Etat(s) contractant(s) suivant(s): ES)

1. Procédé pour la préparation d'une composition comprenant un polymère conducteur d'électricité choisi parmi du polypyrrole et/ou du polypyrrole substitué par polymérisation chimique du pyrrole et/ou du pyrrole substitué dans un milieu réactionnel aqueux comprenant un agent oxydant et un acide caractérisé en ce que le milieu réactionnel comprend du pentoxyde de vanadium comme agent oxydant.

2. Procédé selon la revendication 1, caractérisé en ce que le milieu réactionnel contient au moins un sel.

3. Procédé selon l'une quelconque des revendications 1 ou 2, caractérisé en ce que l'acide mis en oeuvre est choisi parmi l'acide chlorhydrique, l'acide p-toluènesulfonique, l'acide trifluorométhanesulfonique, l'acide octanesulfonique, l'acide butylesulfonique, l'acide méthylsulfonique.

4. Procédé selon l'une quelconque des revendications 1 à 3, caractérisé en ce que l'on met en oeuvre 0,10 à 50 moles de composé du vanadium par mole de pyrrole et/ou de pyrrole substitué.

5. Procédé selon l'une quelconque des revendications 1 à 4, caractérisé en ce que l'on met en oeuvre 0,5 à 20 moles d'acide par mole de pyrrole et/ou de pyrrole substitué.

6. Procédé selon l'une quelconque des revendications 2 à 5, caractérisé en ce que l'on met en oeuvre 0,01 à 20 moles de sel par mole de pyrrole et/ou de pyrrole substitué.

7. Procédé selon l'une quelconque des revendications précédentes caractérisé en ce que le procédé est réalisé à une température comprise entre 0 et 50°C à la pression atmosphérique.

8. Utilisation des compositions obtenues selon l'une quelconque des revendications 1 à 7 dans des batteries feuillets.

## Patentansprüche (Patentansprüche für folgende(n) Vertragsstaat(en): AT, BE, CH, DE, DK, FR, GB, GR, IT, LI, LU, NL, SE)

1. Zusammensetzung, die ein elektrisch leitfähiges, unter Polypyrrol und/oder substituiertem Polypyrrol ausgewähltes Polymer, Vanadiumpentoxid und ein Anion umfaßt.

2. Zusammensetzung gemäß Anspruch 1, dadurch gekennzeichnet, daß das Anion unter Chlorid, Octansulfonat, p-Toluolsulfonat, Butylsulfonat, Methylsulfonat und Trifluormethansulfonat ausgewählt ist.

3. Verfahren zur Herstellung einer Zusammensetzung, die ein elektrisch leitfähiges unter Polypyrrol undloder substituiertem Polypyrrol ausgewähltes Polymer umfaßt, durch chemische Polymerisation von Pyrrol und/oder substituiertem Pyrrol in einem wäßrigen Reaktionsmedium, das ein Oxidationsmittel und eine Säure umfaßt, dadurch gekennzeichnet, daß das Reaktionsmedium Vanadiumpentoxid als Oxidationsmittel enthält.

4. Verfahren gemäß Anspruch 3, dadurch gekennzeichnet, daß das Reaktionsmedium wenigstens ein Salz enthält.

5. Verfahren gemäß einem der Ansprüche 3 oder 4, dadurch gekennzeichnet, daß die eingesetzte Säure unter Salzsäure, p-Toluolsulfonsäure, Trifluormethansulfonsäure, Octansulfonsäure, Butylsulfonsäure und Methylsulfonsäure ausgewählt ist.

6. Verwendung der Zusammensetzungen gemäß einem der Ansprüche 1 oder 2 in Lamellenbatterien.

## Patentansprüche (Patentansprüche für folgende(n) Vertragsstaat(en): ES)

1. Verfahren zur Herstellung einer Zusammensetzung, die ein elektrisch leitfähiges, unter Polypyrrol undloder substituiertem Polypyrrol ausgewähltes Polymer umfaßt, durch chemische Polymerisation von Pyrrol und/oder substituiertem Pyrrol in einem wäßrigen Reaktionsmedium, das ein Oxidationsmittel und eine Säure umfaßt, dadurch gekennzeichnet, daß das Reaktionsmedium Vanadiumpentoxid als Oxidationsmittel enthält.

2. Verfahren gemäß Anspruch 1, dadurch gekennzeichnet, daß das Reaktionsmedium wenigstens ein Salz enthält.

3. Verfahren gemäß einem der Ansprüche 1 oder 2, dadurch gekennzeichnet, daß die eingesetzte Säure unter Salzsäure, p-Toluolsulfonsäure, Trifluormethansulfonsäure, Octansulfonsäure, Butylsulfonsäure und Mothylsulfonsäure ausgewählt ist.

4. Verfahren gemäß einem der Ansprüche 1 bis 3, dadurch gekennzeichnet, daß man 0,10 bis 50 Mol Vanadiumverbindung pro Mol Pyrrol und/oder substituiertem Pyrrol einsetzt.

5. Verfahren gemäß einem der Ansprüche 1 bis 4, dadurch gekennzeichnet, daß man 0,5 bis 20 Mol Säure pro Mol Pyrrol und/oder substituiertem Pyrrol einsetzt.

6. Verfahren gemäß einem der Ansprüche 2 bis 5, dadurch gekennzeichnet, daß man 0,01 bis 20 Mol Salz pro Mol Pyrrol und/oder substituiertem Pyrrol einsetzt.

7. Verfahren gemäß einem der vorhergehenden Ansprüche, dadurch gekennzeichnet, daß das Verfahren bei einer Temperatur zwischen 0 und 50 °C bei Atmosphärendruck durchgeführt wird.

8. Verwendung der gemäß einem der Ansprüche 1 bis 7 erhaltenen Zusammensetzungen in Lamellenbatterien.

## Claims (Claims for the following Contracting State(s): AT, BE, CH, DE, DK, FR, GB, GR, IT, LI, LU, NL, SE)

1. Composition comprising an electrically conductive polymer chosen from polypyrrole and/or substituted polypyrrole, vanadium pentoxide and an anion.

2. Composition according to Claim 1, characterised in that the anion is chosen from the chloride, the octanesulphonate, the p-toluenesulphonate, the butylsulphonate, the methylsulphonate and the trifluoromethanesulphonate.

3. Process for the preparation of a composition comprising an electrically conductive polymer chosen from polypyrrole and/or substituted polypyrrole, by chemical polymerisation of pyrrole and/or of substituted pyrrole in an aqueous reaction mixture comprising an oxidising agent and an acid, characterised in that the reaction mixture comprises vanadium pentoxide as oxidising agent.

4. Process according to Claim 3, characterised in that the reaction mixture contains at least one salt.

5. Process according to any one of Claims 3 or 4, characterised in that the acid used is chosen from hydrochloric acid, p-toluenesulphonic acid, trifluoromethanesulphonic acid, octanesulphonic acid, butylsulphonic acid and methylsulphonic acid.

6. Use of the compositions according to any one of Claims 1 or 2 in leaflet batteries.

## Claims (Claims for the following Contracting State(s): ES)

1. Process for the preparation of a composition comprising an electrically conductive polymer chosen from polypyrrole and/or substituted polypyrrole, by chemical polymerisation of pyrrole and/or of substituted pyrrole in an aqueous reaction mixture comprising an oxidising agent and an acid, characterised in that the reaction mixture comprises vanadium pentoxide as oxidising agent.

2. Process according to Claim 1, characterised in that the reaction mixture contains at least one salt.

3. Process according to any one of Claims 1 or 2, characterised in that the acid used is chosen from hydrochloric acid, p-toluenesulphonic acid, trifluoromethanesulphonic acid, octanesulphonic acid, butylsulphonic acid and methylsulphonic acid.

4. Process according to any one of Claims 1 to 3, characterized in that 0.10 to 50 moles of vanadium compound are used per mole of pyrrole and/or substituted pyrrole.

5. Process according to any one of Claims 1 to 4, characterized in that 0.5 to 20 moles of acid are used per mole of pyrrole and/or substituted pyrrole.

6. Process according to any one of Claims 2 to 5, characterized in that 0.01 to 20 moles of salt are used per mote of pyrrole and/or substituted pyrrole.

7. Process according to any one of the preceding Claims, characterized in that the process is carried out at a temperature between 0 and 50°C at atmospheric pressure.

8. Use of the compositions obtained according to any one of Claims 1 to 7 in leaflet batteries.
